# EUROPEAN PATENT APPLICATION

(11) **EP 4 741 687 A1**
(43) Date of publication of application: **13.05.2026**
(21) Application number: 24211845.3
(22) Date of filing: 08.11.2024
(51) Int. Cl.: F16H 63/30, F16H 63/32, B60K 1/00, F16H 3/66, F16H 3/44

(54) **A TRANSMISSION ARRANGEMENT FOR A VEHICLE**

(71) Applicant: Volvo Truck Corporation, 405 08 Göteborg (SE)
(72) Inventor: FOLKESSON, Johan, 511 62 SKENE (SE); HEDMAN, Anders, 442 67 MARSTRAND (SE)
(74) Representative: Kransell & Wennborg KB

(57) **Abstract**

A transmission arrangement (300) for a vehicle, comprising:
- an input component (132) drivingly connected to an electric motor,
- a first planetary gear system (140), a first sun gearwheel (141) and a first ring gearwheel (144) being rotationally connectable to the input component by a first sleeve (146) and a second sleeve (145), respectively, and a first planet carrier (142) being rotationally connected to an output component (81),
- a crawler unit (390) drivingly connectable between the first planetary gear system (140) and the output component,

the first sleeve being configured to selectively rotationally connect the first sun gearwheel to a stationary member (149a, 149b), the second sleeve being configured to selectively rotationally connect the first ring gearwheel to the stationary member via a third sleeve (395),
the third sleeve being rotationally connected to the stationary member, and being configured to selectively rotationally connect one gear member of the crawler unit to the stationary member to cause the first ring gearwheel to rotate in an opposite direction compared to the first planet gearwheel carrier.

## Description

### TECHNICAL FIELD

The disclosure relates generally to transmission arrangements. In particular aspects, the disclosure relates to a transmission arrangement for a vehicle, a powertrain, and a vehicle. The disclosure can be applied to heavy-duty vehicles, such as trucks, buses, and construction equipment, among other vehicle types. The disclosure is particularly applicable to electric vehicles. Although the disclosure may be described with respect to a particular vehicle, the disclosure is not restricted to any particular vehicle.

### BACKGROUND

In recent years, there has been a trend towards developing powertrains with at least one electric prime mover, i.e., with at least one electric motor for propulsion of the vehicle. For heavy duty vehicles propelled by electric motors, a transmission that enables a plurality of gear states, with gear ratios spanning a large range, is required to achieve startability as well as efficiency at cruising speed. For starting and crawling, the transmission needs to provide a large speed reduction, whereas at cruising speed, it is normally desirable to use as few gear meshes as possible to reduce power losses and improve driving range. It is further desirable to provide a transmission which is compact.

In view of this, there is a strive to develop improved technology relating to electric powertrains for vehicles.

### SUMMARY

According to a first aspect of the disclosure, a transmission arrangement for a vehicle is provided. The transmission arrangement comprises:
an input component configured to be drivingly connected to an electric motor,
a first planetary gear system comprising a first sun gearwheel, a first ring gearwheel, and a first planet carrier carrying a first set of planet gearwheels, wherein the first sun gearwheel and the first ring gearwheel are selectively rotationally connectable to the input component by a first sleeve and a second sleeve, respectively, and wherein the first planet carrier is rotationally connected to an output component,
a crawler unit comprising a plurality of gear members, the crawler unit being configured to selectively drivingly connect the first ring gearwheel to the output component,
wherein the first sleeve is further configured to selectively rotationally connect the first sun gearwheel to a stationary member of the transmission arrangement, and wherein the second sleeve is further configured to selectively rotationally connect the first ring gearwheel to the stationary member via a third sleeve,
wherein the third sleeve is rotationally connected to the stationary member, and wherein the third sleeve is further configured to selectively rotationally connect one of the plurality of gear members of the crawler unit to the stationary member to cause the first ring gearwheel to rotate in an opposite direction compared to a rotational direction of the first planet gearwheel carrier.

The first aspect may seek to provide an in at least some aspects improved transmission arrangement for a vehicle powered by an electric motor. In particular, it may seek to provide such a transmission arrangement which is compact and robust, and which provides selectable gear ratios over a large speed reduction range. A technical benefit may include a compact transmission arrangement enabling a number of selectable speed ratios, including a large speed reduction suitable for crawling. With the non-rotating third sleeve, rotationally connected to the stationary member, such as to a transmission housing, and the second sleeve configured to rotationally connect the first ring gearwheel to the stationary member via the third sleeve, it is further possible to provide a transmission arrangement with a reduced risk of undesired locking of the gear members due to undesired simultaneous rotational connection to the stationary member. In comparison with a transmission arrangement in which the second sleeve is configured to directly rotationally connect the first ring gearwheel to the stationary member, without using the third sleeve, this may improve robustness and facilitate gear shifting.

In the following and throughout the description, the wording "rotationally connected to" and "rotationally connect" should be interpreted such that a component of the transmission arrangement is connected to another component of the transmission arrangement in such a way that the components rotate in the same direction and with the same rotational speed. The components thus rotate in the same direction and with the same rotational speed when being rotationally connected to each other. The term "rotationally connectable to" should be interpreted as "selectively connectable for common rotation with".

By a "driving connection" of two rotating parts is to be understood that torque can be transmitted between the parts, and that the rotational speeds of the parts are proportional. When two rotating parts are drivingly connected, torque can be transmitted between the parts. This may be achieved by two gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel, etc. Thus, in order to be drivingly connected, it is not necessary that two rotating parts are in meshing engagement. It is sufficient that the rotation of one of the parts inevitably leads to the rotation of the other one of the parts. When two parts are drivingly connectable, they are selectively connectable such that torque can be transmitted between the parts.

Optionally in some examples, including in at least one preferred example, the third sleeve is axially displaceable relative to the stationary member between a first position in which it is engageable by the second sleeve, and a second position in which it rotationally connects one of the plurality of gear members of the crawler unit to the stationary member. A technical benefit may include a reduced risk of simultaneous rotational locking of the gear members of the crawler unit and the first ring gearwheel.

Optionally in some examples, including in at least one preferred example, in its second position, the third sleeve is non-engageable by the second sleeve. A technical benefit may include that the gear member of the crawler unit is efficiently prevented from being rotationally connected to the stationary member at the same time as the first ring gearwheel.

Optionally in some examples, including in at least one preferred example, the transmission arrangement further comprises a first shift rod motionally connected to a first shift fork configured to move the first sleeve, a second shift rod motionally connected to a second shift fork configured to move the second sleeve, and a third shift rod motionally connected to a third shift fork configured to move the third sleeve. The wording "motional connection" of two components should be interpreted such that the movement of one of the components inevitably leads to a movement of the other component. A technical benefit may include facilitated gear shifting using the three shift rods. The shift rods may be actuated by one or more actuators.

Optionally in some examples, including in at least one preferred example, the first, second and third shift forks are pivoting shift forks. The pivoting shift forks may preferably be pivotably mounted to the stationary member, such as to the transmission housing, each shift fork being configured to pivot about a respective pivot point in response to a translational movement of the respective shift fork. A technical benefit may include a relatively compact gear shifting arrangement with good precision and which is less prone to wear than a gear shifting arrangement with linear shift forks.

Optionally in some examples, including in at least one preferred example, the first, second and third shift forks are linear shift forks. This may provide a cost-efficient gear shifting arrangement with low complexity.

Optionally in some examples, including in at least one preferred example, the first shift rod is configured to move the first sleeve between a first position in which it rotationally connects the first sun gearwheel to the stationary member, a neutral position, and a second position in which it rotationally connects the first sun gearwheel to the input component. A technical benefit may include the provision of at least two different gear states, one in which the first sun gear is used for input of torque, and one in which the first sun gear is locked to the stationary member, such as to the transmission housing.

Optionally in some examples, including in at least one preferred example, the second shift rod is configured to move the second sleeve between a first position in which it rotationally connects the first ring gearwheel to the input component, a neutral position, and a second position in which it can engage the third sleeve. A technical benefit may include the provision of at least two different gear states, one in which the first ring gear is used for input of torque, and one in which the first ring gear can be locked to the stationary member, such as to the transmission housing, via the third sleeve.

Optionally in some examples, including in at least one preferred example, the first and second shift rods are arranged to physically prevent simultaneous positioning of the first sleeve in its first position and the second sleeve in its second position, and the first and third shift rods are arranged to physically prevent simultaneous positioning of the first sleeve in its first position and the third sleeve in its second position. A technical benefit may include a reduced risk of locking the transmission arrangement in connection with a mis-shift.

Optionally in some examples, including in at least one preferred example, the first and second shift rods are coaxial and have shift rod ends configured to come into contact with one another and prevent simultaneous movement of the first sleeve into its first position and of the second sleeve into its second position. A technical benefit may include that the first and second shift rods are arranged to physically prevent simultaneous rotational connection of the first and second sleeves to the stationary member. Undesired locking of the transmission may thereby be prevented.

An alternative to coaxial first and second shift rods are non-coaxial shift rods, wherein at least one of the shift rods has a lateral extension configured to come into contact with a part of the other shift rod.

Optionally in some examples, including in at least one preferred example, the first shift rod and the third shift rod are coaxial and have shift rod ends configured to come into contact with one another and prevent simultaneous movement of the first sleeve into its first position and of the third sleeve into its second position. A technical benefit may include that the first and third shift rods are arranged to physically prevent simultaneous rotational connection of the first sleeve to the stationary member and of the third sleeve to the one of the plurality of gear members of the crawler unit. In other words, the first sun gear is prevented from being fixed to the stationary member at the same time as the gear member of the crawler unit is fixed to the stationary member. Undesired locking of the transmission may thereby be prevented.

An alternative to coaxial first and third shift rods is non-coaxial shift rods, wherein at least one of the shift rods has a lateral extension configured to come into contact with a part of the other shift rod.

Optionally in some examples, including in at least one preferred example, at least one of the shift rods comprises at least one lateral extension, each lateral extension being configured to come into contact with a portion of another one of the shift rods. A technical benefit may include the possibility to physically prevent undesired movement into "forbidden" positions, resulting in undesired locking of the transmission arrangement, when one or more of the shift rods is/are non-coaxial.

For example, two of the shift rods may be coaxially arranged and the other one of the shift rods may be non-coaxial and extend in parallel with the coaxially arranged shift rods, or at an angle relative to the coaxially arranged shift rods, wherein at least one of the coaxially arranged shift rods comprises a lateral extension configured to come into contact with a shift rod end of the non-coaxial shift rod.

Optionally in some examples, including in at least one preferred example, all three shift rods are non-coaxial with one another. All three shift rods may extend in parallel, or at an angle relative to one another.

Optionally in some examples, including in at least one preferred example, the first, second and third shift rods are arranged to physically prevent simultaneous rotational connection of the first sleeve to the input component, the second sleeve to the input component, and the third sleeve to the one of the plurality of gear members of the crawler unit. A technical benefit may include that it is ensured that the gear member of the crawler unit is not prevented from rotating in a direct gear, in which there is no speed reduction over the first planetary gear system and the crawler unit.

Optionally in some examples, including in at least one preferred example, the second and third shift rods are configured to come into contact with one another and prevent the third sleeve from moving to its second position when the second sleeve rotationally connects the input component to the first ring gearwheel, and vice versa. A technical benefit may include that it is ensured that the gear member of the crawler unit is not prevented from rotating in the direct gear.

Optionally in some examples, including in at least one preferred example, the second shift rod and the third shift rod are coaxial and have shift rod ends configured to come into contact with one another. A technical benefit may include space-efficient prevention of rotational locking of the gear member of the crawler unit in the direct gear.

Optionally in some examples, including in at least one preferred example, the crawler unit comprises a second planetary gear system, the plurality of gear members of the crawler unit comprising a second sun gearwheel, a second ring gearwheel, and a second planet carrier carrying a second set of planet gearwheels. A technical benefit may include a compact crawler unit enabling a large speed reduction.

Optionally in some examples, including in at least one preferred example, the third sleeve is configured to selectively rotationally connect the second planet carrier to the stationary member. The first ring gearwheel is hereby selectively caused to rotate in the opposite direction in comparison with the first planet gearwheel carrier.

Optionally in some examples, including in at least one preferred example, the second ring gearwheel is rotationally connected to the first planet carrier, and the second sun gearwheel is rotationally connected to the first ring gearwheel. A technical benefit may include that a large rotation in the opposite direction is provided for the first ring gearwheel, which generates a large total speed reduction ratio. In addition, the second sun gearwheel can be provided with a small diameter since it will not be exposed to high torque loads.

In other examples, the second ring gearwheel may be rotationally connected to the first ring gearwheel, and the second sun gearwheel may be rotationally connected to the first planet carrier.

Optionally in some examples, including in at least one preferred example, the output component is a differential planet carrier of a differential gear set configured to distribute torque to a first drive shaft and a second drive shaft arranged coaxially with the first planetary gear system. A technical benefit may include a compact transmission arrangement suitable for an electric axle assembly, also referred to as an e-axle.

According to a second aspect of the disclosure, a powertrain for an electrically propelled vehicle is provided. The powertrain comprises an electric motor and a transmission arrangement according to the first aspect, wherein the input component of the transmission arrangement is drivingly connected or connectable to the electric motor. In some examples, the powertrain may comprise two electric motors, wherein the input component of the transmission arrangement is drivingly connected or connectable to both the electric motors. Advantages and effects of the second aspect of the disclosure are largely analogous to the advantages and effects of the first aspect of the disclosure.

According to a third aspect of the disclosure, a vehicle comprising the transmission arrangement according to the first aspect or the powertrain according to the second aspect is provided. The vehicle may be a heavy-duty vehicle such a s a bus, a truck, or a construction machine. Advantages and effects of the third aspect of the disclosure are largely analogous to the advantages and effects of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary powertrain according to an example.
**FIG. 3** is an exemplary transmission arrangement according to a first example.
**FIG. 4** illustrates parts of an exemplary transmission arrangement according to a second example.
**FIG. 5** illustrates parts of an exemplary transmission arrangement according to a third example.
**FIG. 6** illustrates parts of an exemplary transmission arrangement according to a fourth example.
**FIG. 7** illustrates parts of an exemplary transmission arrangement according to a fifth example.
**FIG. 8** is an exemplary powertrain according to another example.
**FIG. 9** is an exemplary transmission arrangement according to another example.

The drawings are schematic and not necessarily drawn to scale. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

For heavy duty vehicles propelled by electric motors, a transmission that enables a plurality of gear states, with gear ratios spanning a large range of possible speed reductions, is required to achieve startability as well as energy efficiency at cruising speed. For starting and crawling, the transmission needs to provide a large speed reduction, whereas at cruising speed, it is normally desirable to use as few gear meshes as possible to reduce power losses and improve driving range.

The present disclosure aims at providing a transmission arrangement for an electric vehicle, which is compact and which is able to provide several different gear ratios such that speed reductions suitable tor starting and crawling as well as for cruising are provided. It further aims at providing such a transmission arrangement in which locking of the transmission due to mis-shift can be avoided in a robust and space-efficient manner.

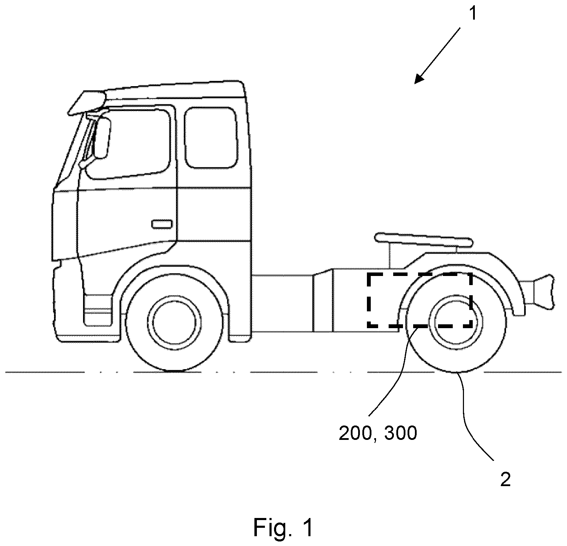

**FIG. 1** is an exemplary vehicle 1 according to an example. The vehicle 1 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc. The vehicle 1 comprises an electric powertrain 200, comprising an electric motor configured to drive driven wheels 2 of the vehicle 1 via a transmission arrangement 300. The driven wheels 2 are in this example rear wheels of the vehicle 1. It shall however be noted that driven wheels may be provided at any other location, such as at the front of the vehicle. In other examples, driven wheels may be used for driving ground-engaging crawler members of the vehicle, e.g., of an excavator.

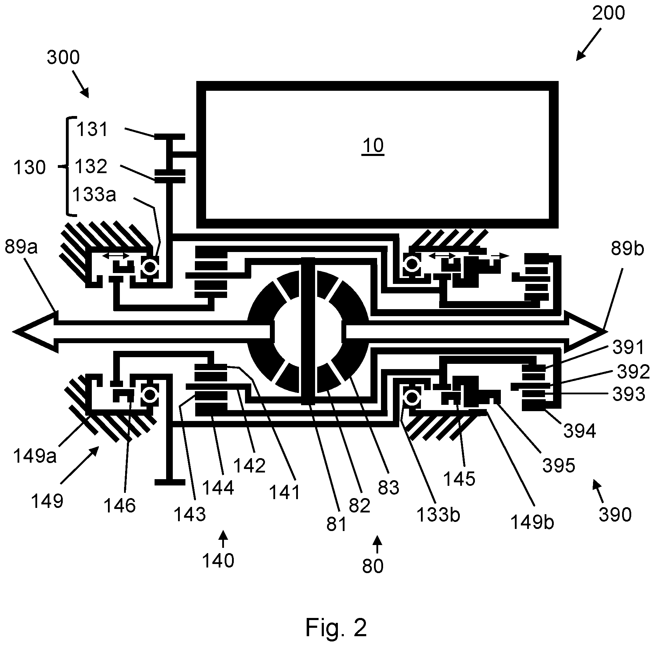

**FIG. 2** illustrates a powertrain 200 according to an example. The powertrain 200 comprises an electric motor 10 configured to deliver torque to two drive shafts 89a, 89b of a vehicle 1, each drive shaft 89a, 89b driving one of the driven wheels 2. The powertrain 200 is in the illustrated example an electric axle assembly, also referred to as an e-axle, comprising a transmission arrangement 300 and a differential gear set 80 via which torque is distributed to the two drive shafts 89a, 89b.

The transmission arrangement 300 comprises an input gearset 130, herein comprising a small-diameter pinion 131 in meshing engagement with an input component 132 in the form of a gearwheel having a relatively large diameter. The input component 132 is mounted by rotary bearings 133a, 133b to a transmission housing 149 comprising stationary members 149a, 149b. Hence, the input component 132 is rotatable relative to the transmission housing 149.

Coaxial with the input component 132 and with the drive shafts 89a, 89b, a first planetary gear system 140 is provided. It comprises a first sun gearwheel 141, a first ring gearwheel 144, and a first planet carrier 142 carrying a first set of planet gearwheels 143 being in meshing engagement with the first sun gearwheel 141 and the first ring gearwheel 144. The first sun gearwheel 141 and the first ring gearwheel 144 are selectively rotationally connectable to the input component 132 by a first sleeve 146 and a second sleeve 145, respectively. The first planet carrier 142 is rotationally connected to an output component 81 in the form of a differential planet carrier 81 of the differential gear set 80. The differential gear set further comprises a set of differential planet gearwheels 82 and two differential output gearwheels 83 rotationally connected to the drive shafts 89a, 89b, respectively.

A crawler unit 390 in the form of a second planetary gear system 390 is also arranged coaxial with the input component 132 and the drive shafts 89a, 89b. The crawler unit 390 comprises a plurality of gear members, such as a second sun gearwheel 391, a second ring gearwheel 394, and a second planet carrier 392 carrying a second set of planet gearwheels 393. The second ring gearwheel 394 is rotationally connected to the first planet carrier 142, and hence also to the differential planet carrier 81. The second sun gearwheel 391 is rotationally connected to the first ring gearwheel 144. A third sleeve 395 is provided for selectively rotationally connecting the second planet carrier 392 to the stationary member 149b of the transmission housing 149. When the third sleeve 395 rotationally connects the second planet carrier 392 to the stationary member 149b, the first ring gearwheel 144 is caused to rotate in an opposite direction compared to a rotational direction of the first planet gearwheel carrier 142.

The third sleeve 395 is rotationally connected to the stationary member 149b such that it cannot rotate relative to the transmission housing 149. This may be realized by external splines or similar provided on an exterior surface of the third sleeve 395, interlocking with internal splines formed on the stationary member 149b. The third sleeve 395 is axially displaceable relative to the stationary member 149b between a first position, to the left in FIG. 2, in which it is engageable by the second sleeve 145, and a second position, to the right, in which it rotationally connects the second planet carrier 392 to the stationary member 149b.

The first sleeve 146 is configured to selectively rotationally connect the first sun gearwheel 141 to the stationary member 149a. It is movable along an axial direction between a first position, to the left in FIG. 2, in which it rotationally connects the first sun gearwheel 141 to the stationary member 149a, a neutral position, in the middle, and a second position, to the right, in which it rotationally connects the first sun gearwheel 141 to the input component 132.

The second sleeve 145 is configured to selectively rotationally connect the first ring gearwheel 144 to the stationary member 149b via the third sleeve 395. It is movable along an axial direction between a first position, to the left in FIG. 2, in which it rotationally connects the first ring gearwheel 144 to the input component 132, a neutral position, in the middle, and a second position, to the right, in which it can engage the rotationally fixed third sleeve 395. When the third sleeve 395 is in its second position, to the right, it is non-engageable by the second sleeve 145 since it is out of reach of the second sleeve 145. Hence, it is impossible to simultaneously rotationally connect the first ring gearwheel 144 and the second planet carrier 392 to the stationary member 149b. This prevents a gear state in which the transmission arrangement is locked and no torque transfer is possible.

At least four gear ratios are possible in the transmission arrangement illustrated in FIG. 2, providing a successively decreasing speed reduction from a first gear to a fourth gear.

In the first gear, providing a very large speed reduction, the first sleeve 146 is moved to its second position in which it engages the first sun gearwheel 141 to the input component 132. The second sleeve 145 is moved to its neutral position, allowing the first ring gearwheel 144 and the second sun gearwheel 391 to rotate. The third sleeve 395 is set to its second position, rotationally connecting the second planet carrier 392 to the stationary member 149b. This will cause the second sun gearwheel 391 and the first ring gearwheel 144 to rotate in an opposite direction compared to the rotational direction of the first planet carrier 142. The first gear is suitable for starting of the vehicle 1 and for crawling at low speed.

In a second gear, providing a smaller speed reduction than the first gear, the first sleeve 146 is kept in its second position in which it engages the first sun gearwheel 141 to the input component 132. The second sleeve 145 is moved to its second position and the third sleeve 395 is moved to its first position, rotationally disconnecting the second planet carrier 392 from the stationary member 149b such that it can rotate freely. The second sleeve 145 engages the third sleeve 395 and thereby rotationally connects the first ring gearwheel 144 to the stationary member 149b. As a result, the first sun gearwheel 141 drives the first planet carrier 142 via the first planet gearwheels 143. The second gear, which is illustrated in FIG. 2, is suitable for relatively low vehicle speeds.

In a third gear, providing a relatively small speed reduction, the first sleeve 146 is moved to its first position in which it rotationally connects the first sun gearwheel 141 to the stationary member 149a. The second sleeve 145 is moved to its first position, rotationally connecting the first ring gearwheel 144 to the input component 132. The third sleeve 395 remains in its first position, rotationally disconnecting the second planet carrier 392 from the stationary member 149b. This causes the first ring gearwheel 144 to drive the first planet carrier 142 via the first planet gearwheels 143. The third gear is suitable for moderate vehicle speeds.

In the fourth gear, providing a speed reduction only over the input gearset 130, the first sleeve 146 is moved to its second position and the second sleeve remains in its first position. Hence, both the first sun gearwheel 141 and the first ring gearwheel 144 are rotationally connected to the input component 132. The third sleeve 395 remains in its first position, rotationally disconnecting the second planet carrier 392 from the stationary member 149b. The first planetary gear system 140 is hence locked for common rotation, resulting in a direct gear, with no speed reduction, across the first planetary gear system 140. The fourth gear is suitable for cruising speed of the vehicle 1.

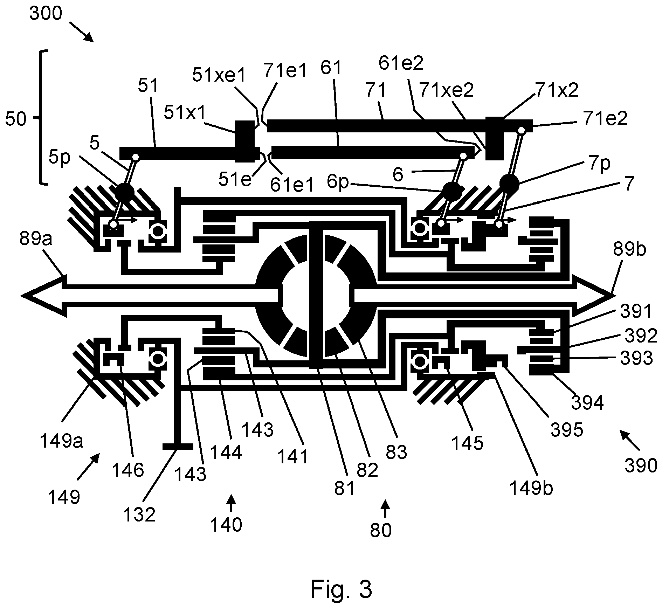

**FIG. 3** illustrates the transmission arrangement 300 shown in FIG. 2 with parts of the input component 132 hidden to illustrate details of a gear shifting arrangement 50 configured for selectively engaging a gear of the transmission arrangement 300 according to a first example embodiment. The gear shifting arrangement 50 comprises a first shift rod 51, a second shift rod 61, and a third shift rod 71. The first shift rod 51 is motionally connected to a first shift fork 5 configured to move the first sleeve 146, the second shift rod 61 is motionally connected to a second shift fork 6 configured to move the second sleeve 145, and the third shift rod 71 is motionally connected to a third shift fork 7 configured to move the third sleeve 395. All three shift forks 5, 6, 7 are pivoting shift forks, pivotably mounted to the transmission housing 149 at a respective pivot point 5p, 6p, 7p. A movement of the first shift rod 51 to the left will hence move the first sleeve 146 to the right, a movement of the second shift rod 61 to the left will move the second sleeve 145 to the right, and a movement of the third shift rod 71 to the left will move the third sleeve 395 to the right. In FIG. 3, all shift rods 51, 61, 71 are illustrated in their far-right positions. The shift rods 51, 61, 71 are configured to be moved by actuators (not shown), such as pneumatic or electric actuators. Each actuator may be coaxial with the respective shift rod it is actuating, but it may also be non-coaxially arranged.

The shift rods 51, 61, 71 are configured to contact one another such that movement of the sleeves 146, 145, 395 into "forbidden" positions is prevented. For this purpose, the first and second shift rods 51, 61 are coaxial, and have ends 51e, 61e1 configured to come into contact upon an attempt to move the second sleeve 145 into its second position whenever the first sleeve 146 is in its first position, and vice versa. This will prevent the first sun gearwheel 141 and the first ring gearwheel 144 from simultaneously being rotationally connected to the transmission housing 149, which would result in a non-rotatable transmission arrangement 300 in which no torque transfer would be possible.

Further, the first and third shift rods 51, 71 are configured to come into contact upon an attempt to move the third sleeve 395 into its second position whenever the first sleeve 146 is in its first position, and vice versa. This will prevent the first sun gearwheel 141 and the second planet carrier 392 from simultaneously being rotationally connected to the transmission housing 149, which would result in a non-rotatable transmission arrangement 300 in which no torque transfer would be possible. In the illustrated example, the first and third shift rods 51, 71 are parallel but not coaxial. The first shift rod 51 is provided with a lateral extension 51x1, protruding laterally from the first shift rod 51 near the end 51e of the first shift rod 51. The lateral extension 51x1 has a facing end 51xe1 that faces and is configured to contact a first end 71e1 of the third shift rod 71 upon the attempt to move the third sleeve 395 into its second position whenever the first sleeve 146 is in its first position, and vice versa.

The second and third shift rods 61, 71 are configured to come into contact upon an attempt to move the third sleeve 395 into its second position whenever the second sleeve is in its first position, and vice versa. This will prevent the second planet carrier 392 from being rotationally connected to the transmission housing 149 whenever the first ring gearwheel 144 is rotationally connected to the input component 132. In the illustrated example, the second and third shift rods 61, 71 are parallel but not coaxial. The third shift rod 71 is provided with a lateral extension 71x2 near a second end 71e2 of the third shift rod 71. The lateral extension 71x2 has a facing end 71xe2 configured to face and contact a second end 61e2 of the second shift rod 61 upon the attempt to move the third sleeve 395 into its second position whenever the second sleeve 145 is in its first position.

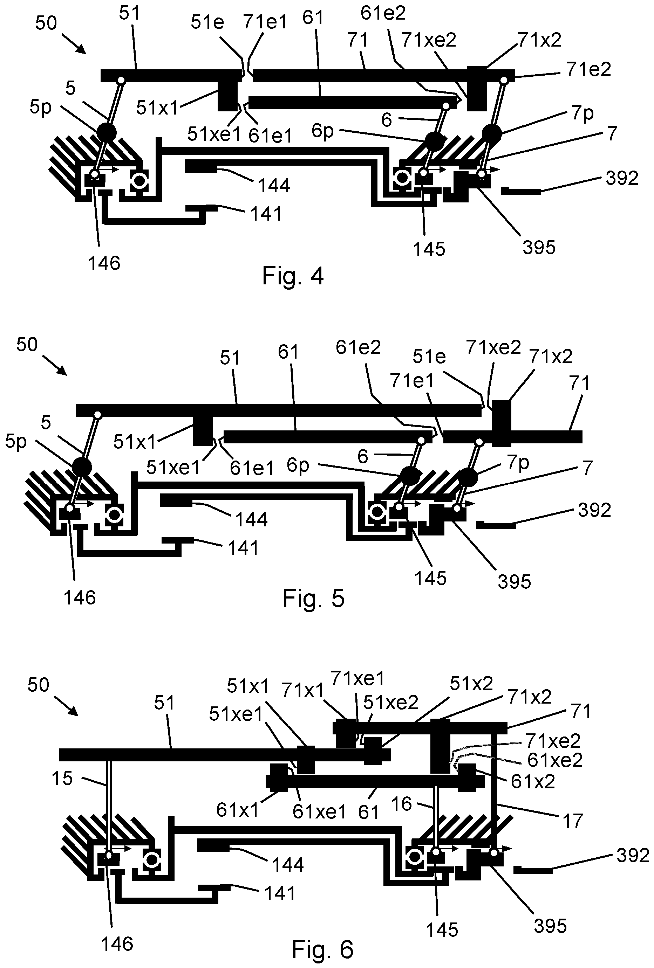

Gear shifting arrangements 50 according to other examples are illustrated in FIGS. 4-7. In those figures, only the parts of the transmission arrangement 300 relevant to illustrate the gear shifting arrangement 50 are shown. Non-illustrated parts in FIGS. 4-7 may be identical to the parts illustrated in FIGS. 2-3.

**FIG. 4** illustrates the gear shifting arrangement 50 according to a second example embodiment, that may be used with the transmission arrangement 300 as illustrated in FIG. 2. The only difference between this example and the gear shifting arrangement 50 illustrated in FIG. 3 is that the first and third shift rods 51, 71 are coaxial, with the second shift rod 61 being parallel but not coaxial with the first and third shift rods 51, 71. The facing surface 51xe1 of the lateral extension 51x1 of the first shift rod 51 is hence configured to make contact with the first end 61e1 of the second shift rod 61, and the ends 51e, 71e1 of the first and third shift rods 51, 71 are configured to come into contact. The functionality corresponds to that described with reference to FIG. 3.

**FIG. 5** illustrates the gear shifting arrangement 50 according to a third example embodiment, that may be used with the transmission arrangement 300 as illustrated in FIG. 2. The gear shifting arrangement 50 according to the third example differs from that illustrated in FIG. 3 in that the second and third shift rods 61, 71 are coaxial, with the first shift rod 51 being parallel but not coaxial with the second and third shift rods 61, 71. Similarly to the second example illustrated in FIG. 4, the facing surface 51xe1 of the lateral extension 51x1 of the first shift rod 51 is configured to make contact with the first end 61e1 of the second shift rod 61. The first end 71e1 of the third shift rod 71 is configured to contact the second end 61e2 of the second shift rod 61, and the lateral extension 71x2 of the third shift rod 71 has a facing surface 71xe2 configured to contact the end 51e of the first shift rod 51. The functionality corresponds to that described with reference to FIG. 3.

**FIG. 6** illustrates the gear shifting arrangement 50 according to a fourth example embodiment, that may be used with the transmission arrangement 300 as illustrated in FIG. 2. In this fourth example, the first, second and third shift forks 15, 16, 17 are linear shift forks configured to be translated by the first, second and third shift rods 51, 61, 71, respectively. Hence, a movement of the respective shift rod 51, 61, 71 to the right will move the respective sleeve 146, 145, 395 to the right. All shift rods 51, 61, 71 are parallel, but not coaxial. The first shift fork 51 comprises a first lateral extension 51x1 having a facing end 51xe1 configured to contact a facing end 61xe1 of a first lateral extension 61x1 of the second shift rod 61 upon an attempt to move the second sleeve 145 into its second position whenever the first sleeve 146 is in its first position, and vice versa. The first shift fork 51 further comprises a second lateral extension 51x2 having a facing end 51xe2 configured to contact a facing end 71xe1 of a first lateral extension 71x1 of the third shift rod 71 upon an attempt to move the third sleeve 395 into its second position whenever the first sleeve 146 is in its first position, and vice versa. The second shift fork 61 further comprises a second lateral extension 61x2 having a facing end 61xe2 configured to contact a facing end 71xe2 of a second lateral extension 71x2 of the third shift rod 71 upon an attempt to move the third sleeve 395 into its second position whenever the second sleeve 145 is in its first position.

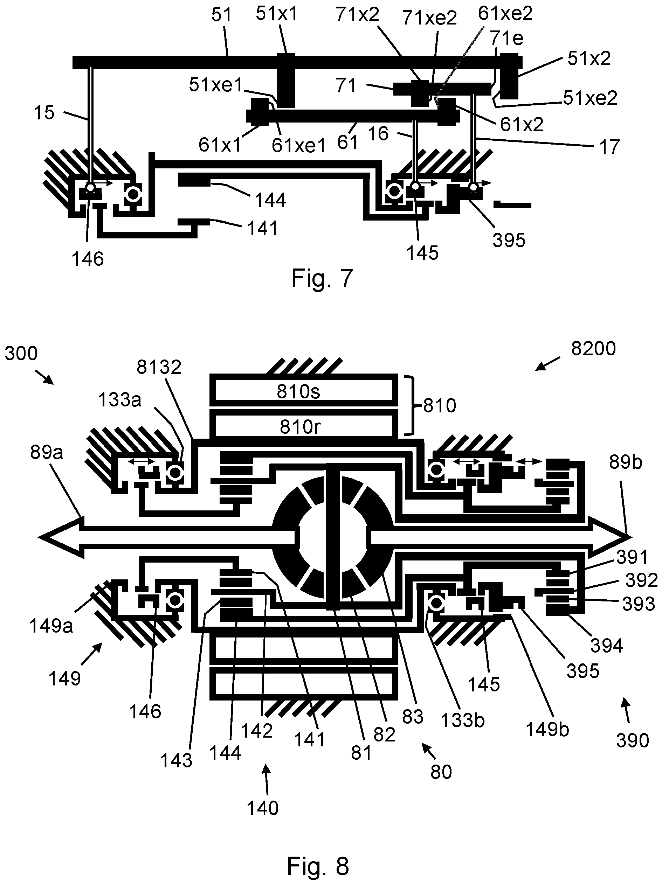

**FIG. 7** illustrates the gear shifting arrangement 50 according to a fifth example embodiment, which is similar to the fourth example, but differs in that the third shift rod 71 only comprises a single lateral extension 71x2, configured to contact the facing end 61xe2 of the second lateral extension 61x2 of the second shift rod 61. The facing end 51xe2 of the second lateral extension 51x2 of the first shift rod 51 is configured to contact an end surface 71e of the third shift rod 71 upon an attempt to move the third sleeve 395 into its second position whenever the first sleeve 146 is in its first position, and vice versa. The functionality of the gear shifting arrangement 50 illustrated in FIG. 7 is the same as described with reference to FIG. 6.

Of course, many other configurations of the gear shifting arrangement 50 are possible, apart from those illustrated in FIGS. 3-7. For example, configurations with a combination of pivoting and linear shift forks are possible, wherein two of the shift rods may be coaxial, or wherein none of the shift rods are coaxial. Also, the number and position of lateral extensions may be varied as long as the functionality described with reference to FIGS. 3-7 is achieved.

**FIG. 8** illustrates a powertrain 8200 according to another embodiment, which differs from the powertrain 200 illustrated in FIG. 2 in that it comprises an electric motor 810 which is coaxial with the transmission arrangement 300, and hence with the drive shafts 89a, 89b. The electric motor comprises a stator 810s, fixed to the transmission housing 149, and a rotor 810r, rotationally connected to an input component 8132 in the form of a rotatable casing in which the first planetary gear system 140 as well as the differential gear set 80 are mounted. The input component 8132 is rotatably mounted to the transmission housing 149 by rotary bearings 133a, 133b. Apart from this, the transmission arrangement 300 is identical to that described with reference to FIG. 2. The gear shifting arrangement 50 according to any one of the example embodiments described above with reference to FIGS. 3-7 may be used in this configuration of the powertrain 8200. The powertrain 8200 may be used in the vehicle 1 illustrated in FIG. 1.

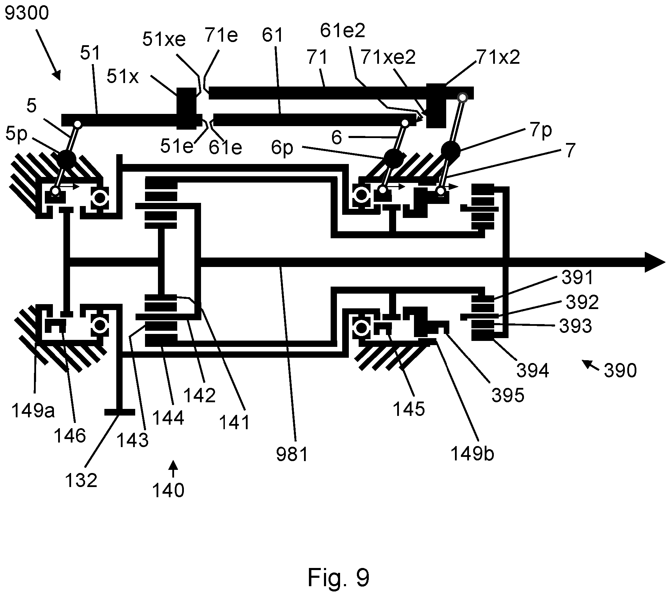

**FIG. 9** illustrates a transmission arrangement 9300 according to another embodiment of the disclosure. In this embodiment, an electric motor (not shown) may be connected to the input component 132 in the same way as illustrated in FIG. 2, i.e., via a pinion and an input component 132 in the form of an input gearwheel, or in the same way as illustrated in FIG. 8. The transmission arrangement 9300 differs from the one illustrated in FIG. 3 in that the first planet carrier 142 and the second ring gearwheel 394 are rotationally connected to an output shaft 981 instead of to a differential planet carrier. The output shaft 981 is coaxial with the planetary gear systems 140, 390 and may be drivingly connectable to a pair of driven wheels 2 of the vehicle 1 as illustrated in FIG. 1, such as via a differential gear set. In some examples, the output shaft 981 may be drivingly connected to the differential gear set via a final drive, e.g., a bevel gear. The transmission arrangement 9300 may hence be used in an electric powertrain which is not configured as an electric axle assembly.

In the embodiments illustrated above, the crawler unit 390 has been described as a planetary gear system in which the second planet carrier 392 is rotationally connected to the stationary member 149b to provide the first gear. However, other configurations of the crawler unit are possible. For example, the crawler unit may comprise a planetary gear system where there is a set of meshing pairs of planet gearwheels between the ring gearwheel and the sun gearwheel, as in DE10230185A1. In such an embodiment, the ring gearwheel of the crawler unit can be selectively rotationally connectable to a stationary member of the transmission via the third sleeve in order to achieve opposite rotation of the planet carrier and the sun gearwheel in the first gear..

In the following, a list of numbered examples of the disclosure is presented.

**Example 1:** A transmission arrangement (300, 9300) for a vehicle (1), comprising:
- an input component (132, 8132) configured to be drivingly connected to an electric motor (10, 810),
- a first planetary gear system (140) comprising a first sun gearwheel (141), a first ring gearwheel (144), and a first planet carrier (142) carrying a first set of planet gearwheels (143), wherein the first sun gearwheel (141) and the first ring gearwheel (144) are selectively rotationally connectable to the input component (132, 8132) by a first sleeve (146) and a second sleeve (145), respectively, and wherein the first planet carrier (142) is rotationally connected to an output component (81, 981),
- a crawler unit (390) comprising a plurality of gear members, the crawler unit (390) being configured to selectively drivingly connect the first ring gearwheel (144) to the output component (81, 981),

wherein the first sleeve (146) is further configured to selectively rotationally connect the first sun gearwheel (141) to a stationary member (149a, 149b) of the transmission arrangement, and wherein the second sleeve (145) is further configured to selectively rotationally connect the first ring gearwheel (144) to the stationary member (149a, 149b) via a third sleeve (395),
wherein the third sleeve (395) is rotationally connected to the stationary member (149a, 149b), and wherein the third sleeve (395) is further configured to selectively rotationally connect one of the plurality of gear members of the crawler unit (390) to the stationary member (149a, 149b) to cause the first ring gearwheel (144) to rotate in an opposite direction compared to a rotational direction of the first planet gearwheel carrier (142).

**Example 2:** The transmission arrangement of Example 1, wherein the third sleeve (395) is axially displaceable relative to the stationary member (149a, 149b) between a first position in which it is engageable by the second sleeve (145), and a second position in which it rotationally connects one of the plurality of gear members of the crawler unit (390) to the stationary member (149a, 149b).

**Example 3:** The transmission arrangement of Example 2, wherein, in its second position, the third sleeve (395) is non-engageable by the second sleeve (145).

**Example 4:** The transmission arrangement of Example 2 or 3, further comprising a first shift rod (51) motionally connected to a first shift fork (5) configured to move the first sleeve (146), a second shift rod (61) motionally connected to a second shift fork (6) configured to move the second sleeve (145), and a third shift rod (71) motionally connected to a third shift fork (7) configured to move the third sleeve (395).

**Example 5:** The transmission arrangement of Example 4, wherein the first, second, and third shift forks (5, 6, 7) are pivoting shift forks.

**Example 6:** The transmission arrangement of Example 4 or 5, wherein the first shift rod (51) is configured to move the first sleeve (146) between a first position in which it rotationally connects the first sun gearwheel (141) to the stationary member (149a, 149b), a neutral position, and a second position in which it rotationally connects the first sun gearwheel (141) to the input component (132, 8132).

**Example 7:** The transmission arrangement of any one of Examples 4-6, wherein the second shift rod (61) is configured to move the second sleeve (145) between a first position in which it rotationally connects the first ring gearwheel (144) to the input component (132, 8132), a neutral position, and a second position in which it can engage the third sleeve (395).

**Example 8:** The transmission arrangement of Examples 6 and 7, wherein the first and second shift rods (51, 61) are arranged to physically prevent simultaneous positioning of the first sleeve (146) in its first position and the second sleeve (145) in its second position, and wherein the first and third shift rods (51, 71) are arranged to physically prevent simultaneous positioning of the first sleeve (146) in its first position and the third sleeve (395) in its second position.

**Example 9:** The transmission arrangement of Example 8, wherein the first and second shift rods (51, 61) are coaxial and have shift rod ends (51e, 61e) configured to come into contact with one another and prevent simultaneous movement of the first sleeve (146) into its first position and of the second sleeve (145) into its second position.

**Example 10:** The transmission arrangement of Example 8, wherein the first shift rod (51) and the third shift rod (71) are coaxial and have shift rod ends (51e, 71e1) configured to come into contact with one another and prevent simultaneous movement of the first sleeve (146) into its first position and of the third sleeve (395) into its second position.

**Example 11:** The transmission arrangement of any one of Examples 4-10, wherein at least one of the shift rods (51, 61, 71) comprises at least one lateral extension (51x1, 51x2, 61x1, 61x2, 71x1, 71x2), each lateral extension (51x1, 51x2, 61x1, 61x2, 71x1, 71x2) being configured to come into contact with a portion of another one of the shift rods (51, 61, 71).

**Example 12:** The transmission arrangement of any one of Examples 4-11, wherein the first, second, and third shift rods (51, 61, 71) are arranged to physically prevent simultaneous rotational connection of the first sleeve (146) to the input component (132, 8132), the second sleeve (145) to the input component (132, 8132), and the third sleeve (395) to one of the plurality of gear members of the crawler unit (390).

**Example 13:** The transmission arrangement of Example 12, wherein the second and third shift rods (61, 71) are configured to come into contact with one another and prevent the third sleeve (395) from moving to its second position when the second sleeve (145) rotationally connects the input component (132, 8132) to the first ring gearwheel (144), and vice versa.

**Example 14:** The transmission arrangement of Example 13, wherein the second shift rod (61) and the third shift rod (71) are coaxial and have shift rod ends (61e2, 71e1) configured to come into contact with one another.

**Example 15:** The transmission arrangement of any one of the preceding Examples, wherein the crawler unit (390) comprises a second planetary gear system (390), the plurality of gear members of the crawler unit (390) comprising a second sun gearwheel (391), a second ring gearwheel (394), and a second planet carrier (392) carrying a second set of planet gearwheels (393).

**Example 16:** The transmission arrangement of Example 15, wherein the third sleeve (395) is configured to selectively rotationally connect the second planet carrier (392) to the stationary member (149a, 149b).

**Example 17:** The transmission arrangement of Example 15 or 16, wherein the second ring gearwheel (394) is rotationally connected to the first planet carrier (142), and the second sun gearwheel (391) is rotationally connected to the first ring gearwheel (144), or wherein the second ring gearwheel (394) is rotationally connected to the first ring gearwheel (144) and the second sun gearwheel (391) is rotationally connected to the first planet carrier (142).

**Example 18:** The transmission arrangement of any one of the preceding Examples, wherein the output component (81) is a differential planet carrier (81) of a differential gear set (80) configured to distribute torque to a first drive shaft (89a) and a second drive shaft (89b) arranged coaxially with the first planetary gear system (140).

**Example 19:** A powertrain (200, 8200) for an electrically propelled vehicle (1), the powertrain (200, 8200) comprising:
- an electric motor (10, 810), and
- a transmission arrangement (300, 9300) according to any one of the preceding Examples, wherein the input component (132, 8132) of the transmission arrangement is drivingly connected or connectable to the electric motor (10, 810).

**Example 20:** A vehicle (1) comprising the transmission arrangement (300, 9300) according to any of Examples 1-18, or the powertrain (200, 8200) according to Example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission arrangement (300, 9300) for a vehicle (1), comprising:
- an input component (132, 8132) configured to be drivingly connected to an electric motor (10, 810),
- a first planetary gear system (140) comprising a first sun gearwheel (141), a first ring gearwheel (144), and a first planet carrier (142) carrying a first set of planet gearwheels (143), wherein the first sun gearwheel (141) and the first ring gearwheel (144) are selectively rotationally connectable to the input component (132, 8132) by a first sleeve (146) and a second sleeve (145), respectively, and wherein the first planet carrier (142) is rotationally connected to an output component (81, 981),
- a crawler unit (390) comprising a plurality of gear members, the crawler unit (390) being configured to selectively drivingly connect the first ring gearwheel (144) to the output component (81, 981),
wherein the first sleeve (146) is further configured to selectively rotationally connect the first sun gearwheel (141) to a stationary member (149a, 149b) of the transmission arrangement, and wherein the second sleeve (145) is further configured to selectively rotationally connect the first ring gearwheel (144) to the stationary member (149a, 149b) via a third sleeve (395),
wherein the third sleeve (395) is rotationally connected to the stationary member (149a, 149b), and wherein the third sleeve (395) is further configured to selectively rotationally connect one of the plurality of gear members of the crawler unit (390) to the stationary member (149a, 149b) to cause the first ring gearwheel (144) to rotate in an opposite direction compared to a rotational direction of the first planet gearwheel carrier (142).

2. The transmission arrangement of claim 1, wherein the third sleeve (395) is axially displaceable relative to the stationary member (149a, 149b) between a first position in which it is engageable by the second sleeve (145), and a second position in which it rotationally connects the one of the plurality of gear members of the crawler unit (390) to the stationary member (149a, 149b),
preferably wherein, in its second position, the third sleeve (395) is non-engageable by the second sleeve (145).

3. The transmission arrangement of claim 2, further comprising a first shift rod (51) motionally connected to a first shift fork (5) configured to move the first sleeve (146), a second shift rod (61) motionally connected to a second shift fork (6) configured to move the second sleeve (145), and a third shift rod (71) motionally connected to a third shift fork (7) configured to move the third sleeve (395).

4. The transmission arrangement of claim 3, wherein the first, second and third shift forks (5, 6, 7) are pivoting shift forks.

5. The transmission arrangement of claim 3 or 4, wherein the first shift rod (51) is configured to move the first sleeve (146) between a first position in which it rotationally connects the first sun gearwheel (141) to the stationary member (149a, 149b), a neutral position, and a second position in which it rotationally connects the first sun gearwheel (141) to the input component (132, 8132).

6. The transmission arrangement of any one of claims 3-5, wherein the second shift rod (61) is configured to move the second sleeve (145) between a first position in which it rotationally connects the first ring gearwheel (144) to the input component (132, 8132), a neutral position, and a second position in which it can engage the third sleeve (395).

7. The transmission arrangement of claims 5 and 6, wherein the first and second shift rods (51, 61) are arranged to physically prevent simultaneous positioning of the first sleeve (146) in its first position and the second sleeve (145) in its second position, and wherein the first and third shift rods (51, 71) are arranged to physically prevent simultaneous positioning of the first sleeve (146) in its first position and the third sleeve (395) in its second position.

8. The transmission arrangement of claim 7, wherein the first and second shift rods (51, 61) are coaxial and have shift rod ends (51e, 61e) configured to come into contact with one another and prevent simultaneous movement of the first sleeve (146) into its first position and of the second sleeve (145) into its second position, and/or
wherein the first shift rod (51) and the third shift rod (71) are coaxial and have shift rod ends (51e, 71e1) configured to come into contact with one another and prevent simultaneous movement of the first sleeve (146) into its first position and of the third sleeve (395) into its second position.

9. The transmission arrangement of any one of claims 3-8, wherein at least one of the shift rods (51, 61, 71) comprises at least one lateral extension (51x1, 51x1, 51x2, 61x1, 61x2, 71x1, 71x2), each lateral extension (51x1, 51x2, 61x1, 61x2, 71x1, 71x2) being configured to come into contact with a portion of another one of the shift rods (51, 61, 71).

10. The transmission arrangement of any one of claims 3-9, wherein the first, second and third shift rods (51, 61, 71) are arranged to physically prevent simultaneous rotational connection of the first sleeve (146) to the input component (132, 8132), the second sleeve (145) to the input component (132, 8132), and the third sleeve (395) to the one of the plurality of gear members of the crawler unit (390).

11. The transmission arrangement of claim 10, wherein the second and third shift rods (61, 71) are configured to come into contact with one another and prevent the third sleeve (395) from moving to its second position when the second sleeve (145) rotationally connects the input component (132, 8132) to the first ring gearwheel (144), and vice versa,
preferably wherein the second shift rod (61) and the third shift rod (71) are coaxial and have shift rod ends (61e2, 71e1) configured to come into contact with one another.

12. The transmission arrangement of any one of the preceding claims, wherein the crawler unit (390) comprises a second planetary gear system (390), the plurality of gear members of the crawler unit (390) comprising a second sun gearwheel (391), a second ring gearwheel (394), and a second planet carrier (392) carrying a second set of planet gearwheels (393),
preferably wherein the third sleeve (395) is configured to selectively rotationally connect the second planet carrier (392) to the stationary member (149a, 149b), and/or
wherein the second ring gearwheel (394) is rotationally connected to the first planet carrier (142), and the second sun gearwheel (391) is rotationally connected to the first ring gearwheel (144).

13. The transmission arrangement of any one of the preceding claims, wherein the output component (81) is a differential planet carrier (81) of a differential gear set (80) configured to distribute torque to a first drive shaft (89a) and a second drive shaft (89b) arranged coaxially with the first planetary gear system (140).

14. A powertrain (200, 8200) for an electrically propelled vehicle (1), the powertrain (200, 8200) comprising:
- an electric motor (10, 810), and
- a transmission arrangement (300, 9300) according to any one of the preceding claims, wherein the input component (132, 8132) of the transmission arrangement is drivingly connected or connectable to the electric motor (10, 810).

15. A vehicle (1) comprising the transmission arrangement (300, 9300) according to any of claims 1-13, or the powertrain (200, 8200) according to claim 14.
